Europäisches Patentamt

European Patent Office

Office européen des brevets

(11) Publication number: **0 165 763**
**A2**

## (12) EUROPEAN PATENT APPLICATION

(21) Application number: **85304159.8**

(22) Date of filing: **12.06.85**

(51) Int. Cl.⁴: **F 16 C 11/06**

(30) Priority: **19.06.84 GB 8415597**

(43) Date of publication of application:
**27.12.85 Bulletin 85/52**

(84) Designated Contracting States:
**BE DE FR GB IT SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Hanson, William Michael**
**3 Mill Street**
**Harbury Warwickshire CV31 3ER(GB)**

(74) Representative: **Farrow, Robert Michael**
**Patent Department Automotive Products plc Tachbrook Road**
**Leamington Spa Warwickshire CV31 3ER(GB)**

(54) A ball and socket joint.

(57) A ball and socket joint in which a bearing insert (12) of a reslient material is retained within a cup-shaped cavity (15) in a housing (16). The bearing insert (12) being retained in the cavity (15) by a recess (17) in the cavity (15) into which an end portion (22) of the bearing insert is biassed.

Fig.1

EP 0 165 763 A2

"A Ball and Socket Joint"

This invention relates to ball and socket joints.

It is known for example from GB 1 323 047 to provide a ball and socket joint in which a bearing insert of a resilient material is retained within a cup shaped cavity in a housing. The bearing insert in such a ball and socket joint forms a part spherical bearing surface by partially enclosing the ball of the ball pin, the ball pin having a shank which extends through an aperture in the housing.

It is usual in such a ball and socket joint to retain the bearing insert in the housing by an end cap or ring held in the mouth of the aperture by radially inwardly deforming the housing.

Such an operation requires considerable force to be exerted upon the housing in order to plastically deform it. If the housing is incorrectly supported during this operation unwanted distortion of the housing can occur which will result in a stiff joint being produced. With such an assembly method it is difficult to maintain the components in position while fitting the end cap or ring and at the same time ensure that sufficient pre-load is provided to prevent excessive free play in the

0165763

assembled ball and socket joint.

It is an object of this invention to provide a ball and socket joint that is of simple construction and is easily assembled in a cost effective manner.

According to this invention there is provided a ball and socket joint comprising a housing having a substantially cup shaped cavity, a ball pin, the shank of which passes through an aperture in the housing and a bearing insert of a resilient material retained within the housing and partially enclosing the part spherical head of the ball pin, the bearing insert having an end portion which before assembly has an outside diameter which is greater than the internal diameter of the co-operating portion of the housing characterised in that the end portion engages a recess in the housing adjacent to the aperture of the housing to retain the bearing insert within the cavity.

Conveniently the recess may be a circumferential groove formed within the housing with which the end portion of the bearing insert engages.

One embodiment of the invention will now be described by way of example and with reference to the accompanying drawings, of which:-

Fig 1 is a transverse section of an assembled ball and socket joint according to the invention;

Fig 2 is an enlarged transverse section of the line II-II of Fig 1 showing on the left hand side of the centre line CL the ball and socket joint in a partly assembled condition and on the right hand side the ball and socket joint in a fully assembled condition.

The ball and socket joint .

comprises a housing 10, a ball pin 11 and a bearing insert 12. The housing 10 has a substantially cup shaped cavity 15, the cavity 15 having truncated spherical base portion 18 and a cylindrical portion 19 forming an aperture 14 in the housing 10. A recess in the form of an internal circumferential groove 17 is formed in the mouth of the aperture 14 into which a lip 20 of the bearing insert 12 is engaged thereby to retain said bearing insert 12. The ball pin 11 has a part spherical head 16 the surface of which co-operates with the inner surface of the bearing insert 12 and a shank 13 which passes through the aperture 14 in the housing 10. The bearing insert 12 is made from a resilient low friction abrasion resistant material such as acetal resin and is substantially cup shaped having a part spherical base portion 21 and a thickened end portion 22. The thickened end portion 22 has a lip 20 and a cylindrical bore of substantially the same diameter as that of the head 16 and a flared outer surface 23. Before assembly the flared outer surface 23 in the region where the thickened end portion 22 adjoins the spherical base portion 21 is of substantially the same diameter as that of the cylindrical portion 19 of the cavity 15 and increases in diameter towards the lip 20.

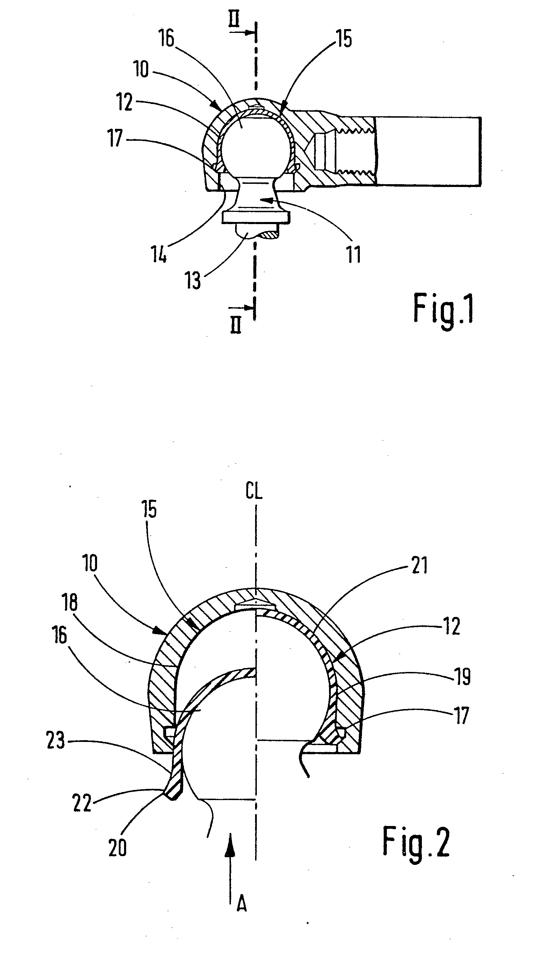

To assemble the joint the head 16 of the ball pin 11 is placed into the bearing insert 12 which is slightly deformed by the operation to loosely grip the head 16 of the ball pin 11. The bearing insert 12 and ball pin 11 at this stage form a bearing sub assembly as is shown in the left hand view of Figure 2.

Assembly of the ball and socket joint is then completed by inserting the bearing sub assembly into the housing 10 and applying an axial load to the ball pin 11 in the direction of arrow A on Figure 2, thereby causing the bearing insert 12 to be deformed. Axial movement of the ball pin 11 into the housing 10 is continued until the lip 20 of the bearing insert 12 is aligned with the groove 17 in the mouth of the aperture 14. The lip 20 then moves radially outwardly into the groove 17 thereby firmly locating and retaining the bearing insert 12 in the housing 10 while maintaining a predetermined preload between the bearing insert 12 and the head 16 of the ball pin 11.

The engagement of the lip 20 in the groove 17 obviates the need to provide separate securing means for the bearing insert 12 and reduces the time required to assemble the joint.

Although the invention has been described solely with reference to a single preferred embodiment it is not limited to the embodiment described. The circumferential groove for example could be replaced by a number of circumferentially spaced recesses or slots, in which case, the continuous lip would be interupted at a number of circumferentially spaced positions to allow engagement with the recesses or slots.

## Claims

1.      A ball and socket joint comprising a housing (10) having a substantially cup shaped cavity (15), a ball pin (11) having a shank (13) which passes through an aperture (14) in the housing (10), and a bearing insert (12) of a resilient material retained within the housing (10) and partially enclosing a part spherical head (16) of the ball pin (11), the bearing insert (12) having an end portion (22) which before assembly has an outside diameter which is greater than the internal diameter of the co-operating portion of the housing characterised in that the end portion (22) of the bearing insert (12) engages a recess (17) in the housing (10) adjacent to the aperture (14) of the housing (10) to retain the bearing insert (12) within the cavity (15).

2.      A ball and socket joint as claimed in Claim 1 characterised in that the recess is a circumferential groove (17).

3.      A ball and socket joint as claimed in Claim 1 or in Claim 2 characterised in that the end portion (22) has a lip (20) for engagement with the recess (17) in the housing (10).

4.      A ball and socket joint as claimed in any preceding claim characterised in that the end portion (22) is a thickened end portion (22) having a
cylindrical bore of substantially the same diameter
as the part spherical head (16) of the ball pin (11).

Fig.1

Fig.2